Europäisches Patentamt

European Patent Office

Office européen des brevets

(19)

(11) Publication number: **0 329 072 B1**

(12) **EUROPEAN PATENT SPECIFICATION**

(45) Date of publication of patent specification: **02.12.92**  (51) Int. Cl.⁵: **A01C 17/00**

(21) Application number: **89102498.6**

(22) Date of filing: **14.02.89**

(54) **A machine of the centrifugal spreader type for spreading granular and powdery material.**

(30) Priority: **15.02.88 DK 755/88**

(43) Date of publication of application:
**23.08.89 Bulletin 89/34**

(45) Publication of the grant of the patent:
**02.12.92 Bulletin 92/49**

(84) Designated Contracting States:
**DE ES FR GB IT NL SE**

(56) References cited:
**WO-A-83/00978**
**DE-A- 1 910 372**
**DE-A- 1 924 631**
**DE-A- 2 132 041**

(73) Proprietor: **A.P. Laursen A/S**
**Fabriken Bogballe**
**DK-7171 Uldum(DK)**

(72) Inventor: **Nielsen, Thorkild**
**Uranusvej 31**
**DK-7100 Vejle(DK)**

(74) Representative: **Roerboel, Leif et al**
**BUDDE, SCHOU & CO. A/S Sundkrogsgade 10**
**DK-2100 Copenhagen O(DK)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a machine of the kind set forth in the preamble of claim 1.

A machine of this kind is known from the German published specification No. DE-A-1,924,631. In this known machine, separate adjusting means are provided for mutually independent adjustment of the relative angular position of the two dosing plates and of the angular position of the two dosing plates as a whole relative to the machine frame, thus making it possible to change the size and position of the outlet opening independently of each other. Further, the framing edges in the dosing plates in this known machine are in the form of non-radial angled lines with a view to keeping the distribution pattern constant with varying size of the outlet opening.

This arrangement does, however, suffer from two significant disadvantages, viz.

a) that the separate adjusting means entail a risk of incorrect adjustment being made by less skilled operators, and

b) that the use of non-radial framing edges makes the machine less adaptable to use with materials with different grain sizes, because the non-radial orientation of the framing edges causes the distance between opposing framing edges to be small, especially when the outlet opening is set to be small.

It is the object of the present invention to provide a machine of the kind initially referred to, in which the disadvantages referred to above are avoided, and this object is achieved with a machine, which according to the present invention further exhibits the features set forth in the characterizing clause of claim 1. In this arrangement, an interdependent and simultaneous change of the magnitude and the angular position of the outlet opening is exploited to achieve a substantially constant distribution pattern, irrespective of whether the flow-through area of the outlet opening is large or small, so that a relatively large variation in the flow-through area of the outlet opening is accompanied by a relatively small variation in the angular position of the opening, exactly what is needed to compensate for that influence on the distribution pattern, which experience has shown that a change in the flow-through area will cause. By using radial framing edges, the disadvantages mentioned above in connection with non-radial edges are avoided.

In order to achieve the desired interdependence between the effective magnitude and the angular position of the outlet opening, the adjustment mechanism may be arranged in any manner suitable for this purpose, e.g. also with devices including curved tracks or cams, but in practice it has proved expedient to use a mechanism consisting of arms and link rods in the same manner as in the known machine referred to above. A corresponding embodiment of the machine according to the present invention is thus of the kind set forth in the preamble of claim 2, and according to the present invention this machine also exhibits the features set forth in the characterizing clause of claim 2. In this manner it is possible to achieve the mutually opposite movements of the two dosing plates without the use of special mechanisms to reverse the movement. In addition, this embodiment provides a clear and simple construction, in which there is no risk of making wrong connections between the link rods, the dosing plates and the arms, such as after repair or maintenance work.

The present invention will now be explained in more detail with reference to the exemplary embodiment of a machine according to the invention shown on the drawing, in which

| | |
|---|---|
| Figure 1 | shows the machine seen from the right-hand side relative to the forward direction of motion, |
| Figure 2 | shows the machine of Figure 1 seen from above, and |
| Figures 3a-c | are partial views of the left-hand half of Figure 2 and show three different possible adjustments of the dosing plates. |

The exemplary embodiment shown on the drawing of a machine of the centrifugal spreader type according to the present invention comprises a chassis 1, that in a manner known per se by means of coupling members 2 and 3 may be supported on corresponding coupling members on a tractor (not shown), with which the machine is to be driven during use, the tractor then moving the machine in the direction of motion indicated with an arrow 4.

In the chassis 1 there are suspended side-by-side two generally funnel-shaped hoppers 5, in the bottom 6 of each of which there is formed an outlet opening 7 shaped like a sector of an annulus. The effective flow-through area in the outlet opening 7 is determined by two dosing plates 8 and 9, in a manner not shown in detail supported for rotational adjustment about a vertical axis 10 extending through the hopper bottom 6, all in such a manner, that the dosing plates 8 and 9 are constantly being pressed against or held in a short distance from the lower side of the bottom 6, whilst their radially extending framing edges 11 and 12 extend beyond the radially extending edges of the outlet opening 7 and thus limit the effective flow-through area of this opening.

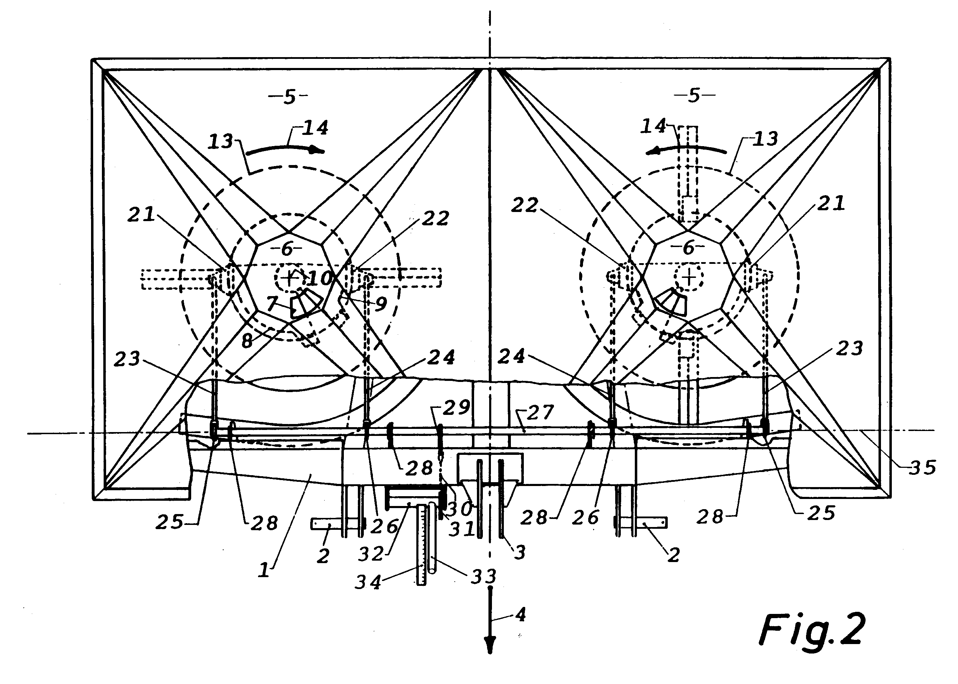

Below the bottom 6 of each hopper 5 there is in a manner known per se situated a spreading disc 13 adapted to be rotated about the vertical axis 10 in the direction shown by an arrow 14 in Figure 2 by drive means 15 not shown in detail. In this manner, granular or powdery material (not shown) falling from the hopper 5 through the outlet opening 7 down onto the spreading disc 13 will in manner known per se be thrown out sideways and hence be spread out on the field.

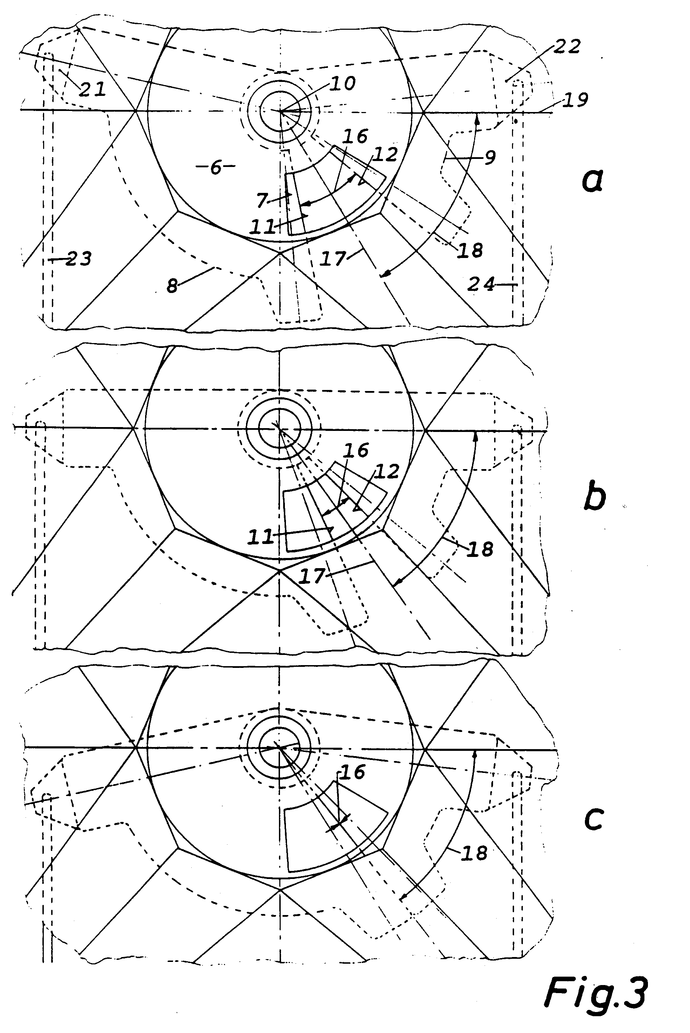

The amount of material being spread per unit of time depends amongst other factors on the effective flow-through area in the outlet opening 7, i.e. of the angular distance 16, cf. Figure 3, between the framing edges 11 and 12 on the dosing plates 8 and 9 respectively. The manner, in which the material is distributed on the field during the spreading operation, depends amongst other factors on the angular position of the bisecting line 17, in Figure 3 indicated by an angle 18 between the bisecting line 17 and a line 19 extending transversely to the direction of motion 4.

Experience has shown that if the angle 18 is held constant and the angular distance 16 between the framing edges 11 and 12 is varied, not only is the amount of material being spread per unit time changed, but also the distribution of this material. In order to maintain the pattern of distribution constant to the greatest possible extent, independently of the amount of material per unit time, the machine is therefore arranged in such a manner, that the angular distance 16 and the angle 18 are varied simultaneously, and in the exemplary embodiment shown this is achieved by using adjustment means to be described in more detail below.

To make it possible to adjust the dosing plates 8 and 9, each of them has an adjustment lug 21 and 22 respectively. The adjustment means further comprise two link rods 23 and 24 respectively, at their rear ends being connected to the adjustment lugs 21 and 22 and with their forward ends to a long arm 25 and a short arm 26 respectively, said arms being rigidly secured to a horizontally extending adjustment shaft 27, which is rotatably supported in a number of bearing lugs 28 on the chassis 1.

On the adjustment shaft 27 there is further secured an adjustment arm 29, being connected through a link rod 30 to a further adjustment arm 31 on a short shaft 32 extending parallel to the adjustment shaft 27 and carrying an adjustment handle 33, the position of which may be read on a scale 34.

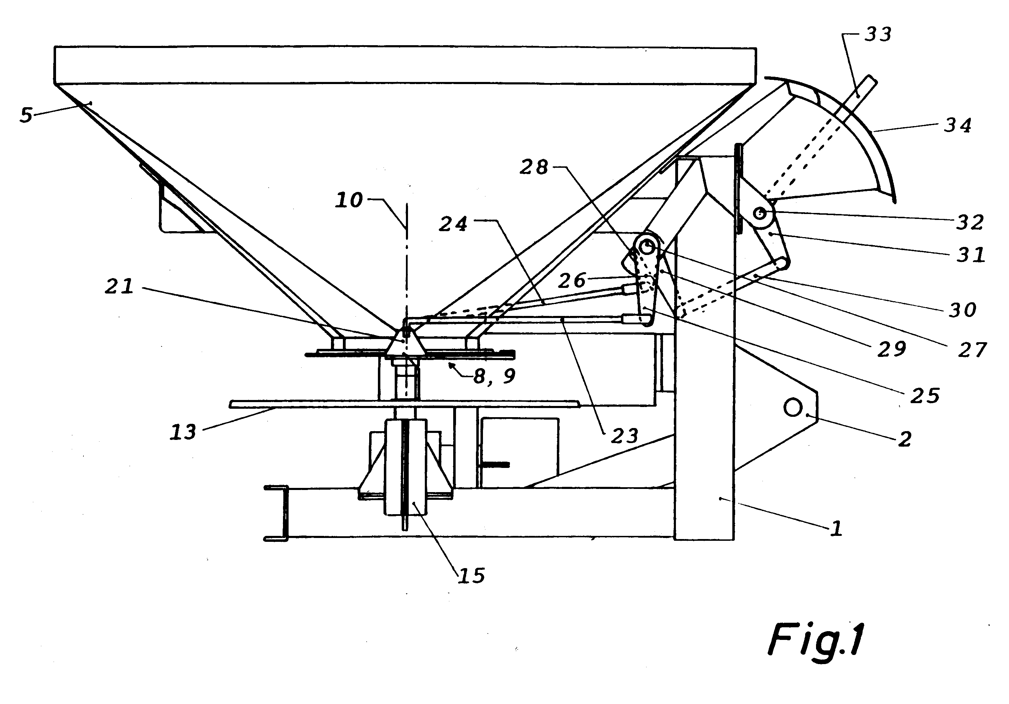

In the position of the adjustment handle 33 shown in Figures 1 and 2 and in the position of the dosing plates 8 and 9 shown in Figure 2, there is an angular distance 16 as shown in Figure 3b between the framing edges 11 and 12 respectively of the dosing plates. If the adjustment handle 33 is moved forward, i.e. in the same direction as the arrow 4 shown in Figure 2, then the short shaft 32 and hence the adjustment shaft 27 will rotate clockwise as shown in Figure 1, for which reason the long arm 25 and the short arm 26 by means of the link rods 23 and 24 respectively will move the adjustment lugs 21 and 22 respectively on the dosing plates 8 and 9 respectively towards the rear, e.g. to the position shown in Figure 3a. Correspondingly, by moving the adjustment handle 33 in the opposite direction, it is possible to move the dosing plates 8 and 9 to the position shown in Figure 3c, in which the distance 16 is equal to zero, i.e. that the flow-through area of the outlet opening is equal to zero.

As may be seen from Figures 3a-c adjustment of the adjustment handle will not only cause the angular distance 16 between the framing edges 11 and 12 to be changed, but will also produce a slight rotation of the bisecting line 17 about the vertical axis 10, i.e. a change of the angle 18 from the value - not necessarily its maximum value - shown in Figure 3a, through the intermediate value shown in Figure 3b to the minimum value shown in Figure 3c, at which the outlet opening 7 is closed. Experience has shown that by a suitable adjustment of the length ratio between the long arm 25 and the short 26 it is possible to achieve that the distribution of the material being spread remains essentially constant, irrespective of whether the angular distance 16 between the framing edges 11 and 12 is large or small.

In the exemplary embodiment shown, the adjustment means comprise a long arm 25 and a short arm 26 having a fixed length ratio to each other, but it lies within the scope of the present invention to arrange both these two arms and the link rods 23 and 24 to be adjustable in length. Neither is the present invention limited to the use of arms (levers) and link rods to transmit the adjustment movements from the adjustment handle 33 to the dosing plates 8 and 9, as it is also possible to use means comprising curved tracks or cams to transmit the adjustment movements, provided, of course, that the criteria for the mutual dependence between the opening angle 16 and the angular position of the bisection line 17 are met.

In Figure 2 the axis of rotation for the adjustment shaft 27 bears the reference number 35.

## Claims

1. A machine of the centrifugal spreader type for spreading granular and powdery material and of the kind comprising a machine chassis (1) with

   a) at least one container (5) for the material to be spread, said container having

   b) a bottom (6) with at least one outlet opening (7), adjacent to which there are situated

c) two dosing plates (8,9) supported for rotational adjustment about a substantially vertical axis (10), said dosing plates having framing edges (11,12) and depending on the adjustment of the dosing plates covering a greater or lesser part of the outlet opening (7) from each side of the latter,

d) under each container (5) a spreading disc (13) being rotatably supported about said axis (10) and adapted whilst rotating to throw the material flowing out through the outlet opening (7) radially outwards, and

e) an adjustment mechanism (21-33) connected to the dosing plates (8,9) of each container (5), said mechanism being adapted to rotate the dosing plates relative to each other and to the outlet opening (7), such that the framing edges are moved in a positive interdependence,

**characterized** in

that the framing edges (11,12) of the dosing plates (8, 9) extend substantially radially relative to the axis (10); and

that said mechanism (21-33) is arranged to turn the radial centre line (17) of the angular distance (16) between the framing edges (11,12) about the axis (10) simultaneously with a change in the angular distance (16), and hence the effective flow-through area of the opening (7), between the framing edges (11,12), such that dosing plates (8,9) move to an unequal degree in mutually opposite directions.

2. A machine according to claim 1 and of the kind, in which the adjustment mechanism (21-33) comprises two rigidly interconnected arms (25,26) being supported for rotation about a common, substantially horizontal axis (35), said arms (25, 26) through link rods (23,24) further being connected to an eccentric linkage member (21,22) on each of the two dosing plates (8,9) belonging to each container (5), **characterized** in that the two linkage members (21,22) on the dosing plates, as well as the link rods (23,24) and arms (25,26) of unequal length connected thereto, are placed on opposite sides of a plane extending through the first-mentioned substantially vertical axis (10) and transverse to the last-mentioned, substantially horizontal axis (35).

## Patentansprüche

1. Maschine nach Art eines Schleuderstreuers zum Verstreuen von granuliertem und pulvrigem Material mit einem Maschinengestell (1) mit

a) mindestens einem Behälter (5) für das zu verstreuende Material, wobei der Behälter folgendes aufweist:

b) ein Unterteil (6) mit mindestens einer Austrittsöffnung (7), an die angrenzend sich folgendes befindet:

c) zwei Dosierbleche (8, 9), die zwecks Drehverstellung um eine im wesentlichen vertikale Achse (10) angebracht sind, wobei die Dosierbleche Einfassungskanten (11, 12) aufweisen und je nach Einstellung der Dosierbleche einen größeren oder kleineren Teil der Austrittsöffnung (7) von jeder Seite der Öffnung her abdecken,

d) unter jedem Behälter (5) eine Streuscheibe (13), die drehbar um die Achse (10) angebracht und so beschaffen ist, daß während der Drehbewegung das Material durch die Austrittsöffnung (7) radial nach außen austritt, und

e) einen Stellmechanismus (21-33), der mit den Dosierblechen (8, 9) jedes Behälters (5) verbunden ist, wobei der Mechanismus so beschaffen ist, daß die Dosierbleche im Verhältnis zueinander und zur Austrittsöffnung (7) gedreht werden, so daß die Einfassungskanten in einer positiven gegenseitigen Abhängigkeit bewegt werden,

**dadurch gekennzeichnet,**

daß die Einfassungskanten (11, 12) der Dosierbleche (8, 9) sich im wesentlichen radial relativ zur Achse (10) erstrecken; und

daß der Mechanismus (21-33) so angeordnet ist, daß die radiale Mittellinie (17) des Winkelabstands (16) zwischen den Einfassungskanten (11, 12) gleichzeitig mit einer Änderung des Winkelabstands (16) und somit des effektiven Durchlaßquerschnitts der Öffnung (7) zwischen den Einfassungskanten (11, 12) um die Achse (10) gedreht wird, so daß die Dosierbleche (8, 9) sich in einem ungleichen Maße in entgegengesetzte Richtungen bewegen.

2. Maschine nach Anspruch 1 und bei der der Stellmechanismus (21-33) zwei fest miteinander verbundene Hebel (25, 26) aufweist, die zwecks Drehung um eine gemeinsame, im wesentlichen horizontale Achse (35) gehaltert sind, wobei die Hebel (25, 26) ferner über Verbindungsstangen (23, 24) mit einem exzentrischen Verbindungsglied (21, 22) an jedem der beiden, zu je einem Behälter (5) gehörenden Dosierblechen (8, 9) verbunden sind, **dadurch gekennzeichnet,** daß die beiden Verbindungsglieder (21, 22) an den Dosierblechen sowie die Verbindungsstangen (23, 24) und die mit ihnen verbundenen Hebel (25, 26) ungleicher Länge sich auf gegenüberliegenden Seiten einer Ebene befinden, die sich durch die erstgenannte, im wesentlichen vertikale Achse (10) und quer zur letztgenannten, im wesentlichen horizontalen Achse (35) erstreckt.

## Revendications

1. Machine du type épandeur centrifuge destinée à épandre une matière granulaire ou pulvérulente et du type comprenant un châssis (1) de machine qui porte :

   a) au moins un conteneur (5) pour la matière à épandre, ledit conteneur présentant

   b) un fond (6) muni d'au moins un ouverture de sortie (7) à proximité duquel sont placés

   c) deux plateaux doseurs (8, 9) supportés pour décrire un mouvement de réglage par rotation autour d'un axe sensiblement vertical (10), lesdits plateaux doseurs présentant des bords limites (11, 12) et couvrant, selon le réglage des plateaux doseurs, une partie plus ou moins grande de l'ouverture de sortie (7) à partir de chaque bord de cette ouverture,

   d) au-dessous de chaque conteneur (5), un disque d'épandage (13) supporté rotatif autour dudit axe (10) et adapté pour projeter radialement vers l'extérieur, pendant sa rotation, la matière qui s'écoule à travers l'ouverture de sortie (7), et

   e) un mécanisme de réglage (21-33) relié aux plateaux doseurs (8, 9) de chaque conteneur (5), ledit mécanisme étant adapté pour faire tourner les plateaux doseurs l'un par rapport à l'autre et par rapport à l'ouverture de sortie (7), de telle manière que les bords limites se déplacent en interdépendance positive,

   caractérisée

   en ce que les bords limites (11, 12) des plateaux doseurs (8, 9) s'étendent sensiblement radialement par rapport à l'axe (10) ; et

   en ce que ledit mécanisme (21-33) est agencé pour faire tourner l'axe radial (17) de la distance angulaire (16) formée entre les bords limites (11, 12) autour de l'axe (10) simultanément avec la modification de la distance angulaire (16) et, par conséquent, de la section effective d'écoulement de l'ouverture (7) formée entre les bords limites (11, 12), de telle manière que les plateaux doseurs (8, 9) se déplacent à des degrés inégaux dans les sens mutuellement opposés.

2. Machine selon la revendication 1, et du type dans lequel le mécanisme de réglage (21-33) comprend deux bras (25, 26) interconnectés rigidement, supportés pour tourner autour d'un axe commun sensiblement horizontal (35), lesdits bras (25, 26) étant en outre reliés par l'intermédiaire de bielles (23, 24) chacuns à un élément de tringlerie excentrique (21, 22) porté par chacun des deux plateaux doseurs (8, 9) qui appartiennent à chaque conteneur (5), caractérisée en ce que les deux éléments de tringlerie (21, 22) portés par les plateaux doseurs, ainsi que les bielles (23, 24) et les bras (25, 26) de longueurs inégales qui leur sont reliés, sont placés de part et d'autre d'un plan qui passe par l'axe sensiblement vertical (10) mentionné en premier lieu et transversalement à l'axe sensiblement horizontal (35) mentionné en dernier lieu.

Fig.1

EP 0 329 072 B1

Fig.2

EP 0 329 072 B1

*Fig.3*